**Europäisches Patentamt**

**European Patent Office**

**Office européen des brevets**

(19)

(11) Veröffentlichungsnummer: **0 104 581**
**B1**

(12)

# EUROPÄISCHE PATENTSCHRIFT

(45) Veröffentlichungstag der Patentschrift:
**01.06.88**

(51) Int. Cl.⁴: **H 04 Q 3/00, H 04 M 19/00**

(21) Anmeldenummer: **83109274.7**

(22) Anmeldetag: **19.09.83**

(54) **Schleifemstromeinspeisung für einen Kennzeichenumsetzer.**

(30) Priorität: **22.09.82 DE 3235085**

(43) Veröffentlichungstag der Anmeldung:
**04.04.84 Patentblatt 84/14**

(45) Bekanntmachung des Hinweises auf die Patenterteilung:
**01.06.88 Patentblatt 88/22**

(84) Benannte Vertragsstaaten:
**AT CH DE FR IT LI**

(56) Entgegenhaltungen:
**EP - A - 0 057 009**
**GB - A - 2 065 418**
**GB - A - 2 079 499**

(73) Patentinhaber: **Siemens Aktiengesellschaft Berlin und München, Wittelsbacherplatz 2, D-8000 München 2 (DE)**

(72) Erfinder: **Sontheim, Johann, Ing. grad.,
Alpspitzstrasse 14, D-8133 Feldafing (DE)**
Erfinder: **Stummer, Baldur, Dipl.-Ing.,
Wilhelm-Kuhnert-Strasse 21, D-8000 München 90 (DE)**

## Beschreibung

Die Erfindung betrifft eine Schleifenstromeinspeisung für einen Kennzeichenumsetzer mit zwei Speisewiderständen, die jeweils an einen Pol einer Speisespannung und über Siebmittel an jeweils eine Ader (a, b) einer Fernsprechleitung angeschlossen sind.

Kennzeichenumsetzer werden beispielsweise in Multiplexsystemen verwendet, beispielsweise im Zeitmultiplex-System PCM 30 F der Firma Siemens AG, wie im Sonderdruck Bestell-Nr. S 42022-A732-A2-1-29 beschrieben. Sie dienen zur Umsetzung von Gleichstrom-Kennzeichen.

Die Schleifenstromeinspeisung erfolgte bislang symmetrisch über Widerstände und Drosseln. Um die Nebensprechdämpfung zu erhöhen, war ausserdem mindestens ein Kondensator zur Siebung vorgesehen. Die in den ohmschen Widerständen erzeugte Wärme verhinderte bisher eine kompakte Bauausführung der Kennzeichenumsetzer.

In der Europäischen Patentanmeldung EP-A-0 057 009 ist eine Schaltung zur Stromeinspeisung für Telefonvermittlungen beschrieben.

Da die Verwendung einer Konstantstromquelle für viele Teilnehmereinrichtungen nicht geeignet ist, werden Regelschaltungen verwendet, die eine Widerstandscharakteristik nachbilden.

An eine Spannungsquelle ist die Kettenschaltung eines Gleichspannungsumsetzers und einer Gleichstromquelle angeschlossen, die über die Telefonleitungen den Teilnehmer versorgt.

Als Gleichspannungsumsetzer wird ein Schaltregler verwendet, als Gleichstromquelle dient eine umfangreiche Transistorschaltung, die für den Teilnehmer einen konstanten Widerstand darstellt. Geregelt wird die Ausgangsspannung des Gleichspannungsumsetzers in Abhängigkeit von seiner Ausgangsspannung und von dem Schleifenstrom oder der Spannung am Ausgang der Gleichstromquelle.

Diese Schaltung ist sehr aufwendig. Der Leistungsverbrauch wird auch nur bei geringen Leitungs- und Teilnehmerwiderständen gesenkt, bei grösseren Widerständen ist er sogar höher als bei Ausführungen mit ohmschen Widerständen.

In der Patentanmeldung GB-A-2 079 499 ist eine symmetrisch ausgeführte Schleifenstromeinspeisung beschrieben, bei der die Steuerung des Schleifenstroms über einen Rückkopplungszweig erfolgt.

Die Stromeinspeisung erfolgt über Operationsverstärker. Zur Verminderung der Verlustleistung werden deren Versorgungsspannungen über gesteuerte Schaltregler erzeugt. Der Verlauf der Stromkurve in Abhängigkeit vom Lastwiderstand wird von der Dimensionierung der Schaltung bestimmt.

Auch diese Schaltungsanordnung erfordert einen erheblichen Schaltungsaufwand und erzeugt in den Operationsverstärkern eine nicht unerhebliche Verlustleistung.

Neben der Verlustleistung bestimmt auch der Schaltungsaufwand die Baugrösse der Kennzeichenumsetzer.

Ferner muss beachtet werden, dass bei Kennzeichenumsetzern häufig auch noch die Polarität auf den Sprechadern vertauscht wird. Hierdurch vergrössert sich der Schaltungsaufwand nochmals, da entweder Umschalteinrichtungen oder spezielle Schaltungseinheiten für die unterschiedlichen Stromrichtungen vorgesehen werden müssen.

Aufgabe der Erfindung ist es, eine mit geringem Schaltungsaufwand realisierbare Schleifenstromeinspeisung mit möglichst geringer Verlustleistung für einen Kennzeichenumsetzer anzugeben. Die Aufgabe wird durch die im Patentanspruch 1 angegebenen Merkmale gelöst.

Die ohmschen Widerstände, die den Speisestrom bestimmen, sind durch eine Serienschaltung einer Speisedrossel mit einem elektronischen Schalter ersetzt. Durch die angegebenen Steuerkriterien der elektronischen Schalter wird ein ohmscher Widerstand nachgebildet. Sind die elektronischen Schalter geöffnet, muss dafür gesorgt werden, dass der Strom in den Induktivitäten in derselben Richtung weiterfliessen kann. Da diese Schaltungsanordnung nur kleine ohmsche Widerstände enthält, ist die Wärmeentwicklung gering.

Es ist vorteilhaft, dass als Schaltelemente Dioden vorgesehen sind. Durch die Schaltdioden fliesst der Strom, während die elektronischen Schalter geöffnet sind. Dies ist eine sehr einfache Lösung, um den Stromkreis zu schliessen.

Es ist vorteilhaft, dass die Regeleinrichtung die elektronischen Schalter mit einer konstanten Frequenz betätigt und die Schliesszeiten der elektronischen Schalter variiert. Die Schaltfrequenz kann so gewählt werden, dass sie und ihre Oberwellen keine Störungen verursachen. Hier ist die Abtastfrequenz (z.B. 8 kHz) zu beachten.

Es ist zweckmässig, dass die Regeleinrichtung einen ersten Komparator enthält, dessen erstem Eingang eine dem Schleifenstrom proportionale Spannung zugeführt ist, dessen zweitem Eingang eine dem Spannungsabfall an den nachgebildeten Speisewiderständen proportionale Spannung zugeführt ist, dass der an einem Eingang des ersten Komparators anliegenden Spannung eine dreieckförmige Spannung konstanter Frequenz überlagert ist und dass der Ausgang des ersten Komparators an die Steuereingänge der elektronischen Schalter geführt ist.

Die Regelbedingungen werden durch einen Komparator auf einfache Art realisiert. Einer Eingangsspannung des Komparators wird eine Dreieckspannung in der gewünschten Schaltfrequenz überlagert.

Es ist vorteilhaft, dass ein Verstärker zur Messung des Spannungsabfalls an den nachgebildeten Speisewiderständen an die fernsprechleitungsseitigen Anschlüsse der Speisedrosseln angeschlossen ist und dass der Ausgang des Verstärkers über einen Tiefpass an den zweiten Eingang des ersten Komparators geführt ist. Durch den eingeschalteten Tiefpass wirkt der durch jeweils eine Speisedrossel und einen elektronischen Schalter gebildete Schaltregler als Induktivität für Sprachfrequenzen mit der entsprechenden Siebwirkung.

Weitere vorteilhafte Ausbildungen der Erfindung sind in den übrigen Unteransprüchen angegeben.

Im folgenden wird das Prinzip und ein Ausführungsbeispiel der vorliegenden Erfindung anhand von Zeichnungen näher erläutert.

Es zeigen:

Fig. 1 eine herkömmliche Schleifenstromeinspeisung,

Fig. 2 eine erfindungsgemässe Schleifenstromeinspeisung,

Fig. 3 ein Ausführungsbeispiel der Erfindung,

Fig. 4 eine Schaltung zur Messung des Schleifenstromes,

Fig. 5 eine Schaltung zur Messung der Spannung am Schleifenwiderstand,

Fig. 6 eine Gleichrichterschaltung zur Betragsbildung,

Fig. 7 eine Ansteuerlogikschaltung,

Fig. 8 ein Prinzipschaltbild der erfindungsgemässen Schleifenstromeinspeisung,

Fig. 9 ein Zeitdiagramm des in einer Drossel fliessenden Stromes und

Fig. 10 ein Zeitdiagramm der Eingangsspannungen des Regelteiles.

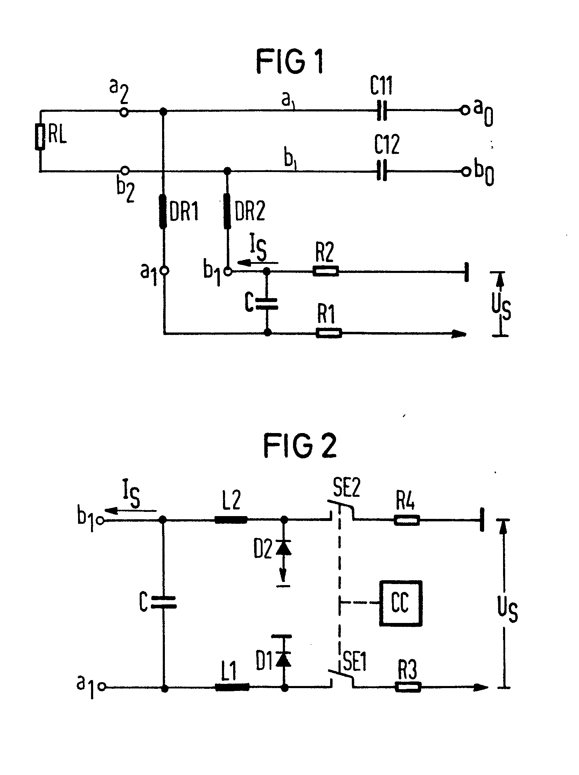

Bei der in Fig. 1 dargestellten herkömmlichen Stromeinspeisung sind die Fernsprechadern a, b über jeweils eine Drossel DR1, DR2 und jeweils einen ohmschen Widerstand R1, R2 an den Minuspol bzw. Masse der Speisespannung $U_S$ angeschlossen. Ein Kondensator C ist zwischen die Verbindungspunkte $a_1$, $b_1$ der Drosseln DR1, DR2 mit den ohmschen Widerständen R1, R2 geschaltet. Über Kondensatoren C11, C12 gleichstrommässig von den Fernsprechadern a, b entkoppelte Anschlusspunkte $a_0$ und $b_0$ führen zu einer ersten Fernsprechvermittlung. An die Anschlusspunkte $a_2$ und $b_2$ ist ein Fernsprechteilnehmer oder eine zweite Vermittlung, symbolisiert durch den Widerstand $R_L$, angeschlossen. Der gesamte zwischen den Anschlusspunkten $a_2$ und $b_2$ liegende ohmsche Widerstand ist mit $R_L$ bezeichnet. Für die Kennzeichenübertragung sind nur die Gleichstromwiderstände von Bedeutung.

Über den ohmschen Widerstand R2, die Drossel DR2, den Widerstand $R_L$, die Drossel DR1, fliesst der für die Kennzeichenübertragung notwendige Speisestrom $I_S$. Die Übertragung der Kennzeichen erfolgt beispielsweise durch die Unterbrechung des Stromkreises durch den Fernsprechteilnehmer bzw. die zweite Vermittlung. In den Speisewiderständen R1, R2 wird beträchtliche Wärme erzeugt.

In Fig. 2 ist die erfindungsgemässe Stromeinspeisung dargestellt. Die Speisewiderstände R1 und R2 sind jeweils durch die Reihenschaltung einer Speisedrossel L1 mit einem elektronischen Schalter SE1 und eines kleinen ohmschen Widerstandes R3 bzw. durch die Reihenschaltung L2, SE2 und R4 ersetzt. Die Reihenschaltung L1, SE1, R3 liegt zwischen dem Anschlusspunkt $a_1$ und dem Minuspol der Speisespannung $U_S$; die Reihenschaltung L2, SE2, R4 liegt zwischen dem Anschlusspunkt $b_1$ und Masse der Speisespannung $U_S$. Zwischen den Anschlusspunkten $a_1$ und $b_1$ liegt wiederum der Kondensator C. Eine erste Schaltdiode D1 ist an den Anschluss der Speisedrossel L1 angeschaltet, der mit dem ersten elektronischen Schalter SE1 verbunden ist. Die Kathode dieser Diode ist an Masse geschaltet. Eine zweite Diode D2 ist ebenso an die zweite Speisedrossel L2 angeschaltet. Ihre Anode ist mit dem Minuspol der Speisespannung $U_S$ verbunden. Eine Regeleinrichtung CC steuert die elektronischen Schalter SE1 und SE2.

Diese schliessen und öffnen gleichzeitig. Zusammen mit den Speisedrosseln bilden sie ohmsche Widerstände nach. Die ohmschen Widerstände R3, R4 dienen in erster Linie als Messwiderstände zur Steuerung der elektronischen Schalter SE1 und SE2. Da ihr Widerstandswert sehr gering ist, wird nur unwesentliche Wärme erzeugt. Aus Gründen der Übersprechdämpfung ist der dargestellte symmetrische Aufbau der Stromeinspeisung erforderlich. Die Versorgungsspannung kann üblicherweise zur Kennzeichenübertragung umgepolt werden. In diesem Fall sind weitere Schalter und entsprechend gepolte Schaltdioden erforderlich.

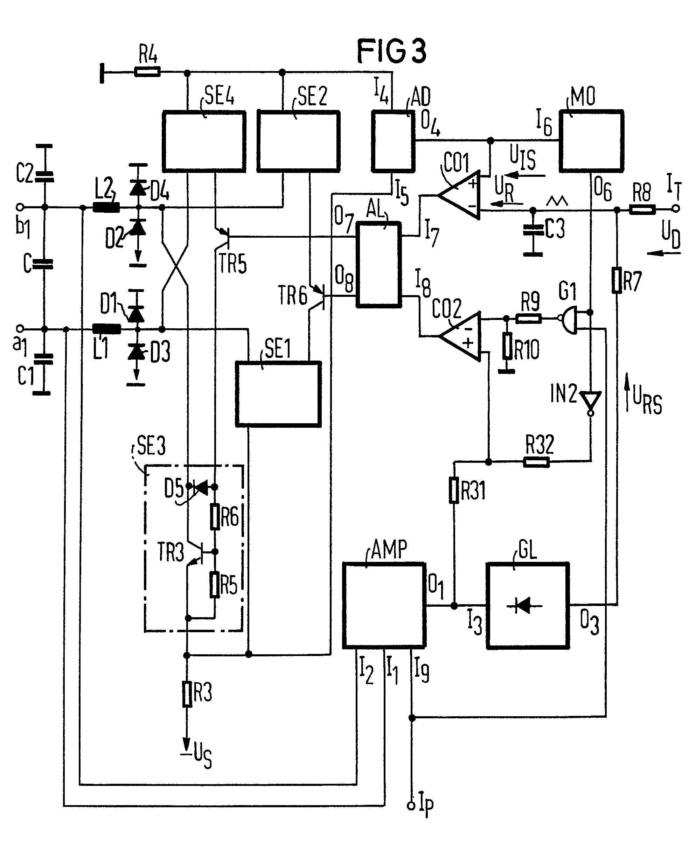

In Fig. 3 ist ein Ausführungsbeispiel der Erfindung dargestellt. Das Ausführungsbeispiel enthält vier elektronische Schalter SE1 bis SE4. Der erste elektronische Schalter SE1 ist über den ohmschen Widerstand R3 (entsprechend Fig. 2) an den Minuspol der Versorgungsspannung angeschaltet, die in dieser Figur nicht weiter dargestellt ist. Der zweite Anschluss des ersten elektronischen Schalters SE1 ist mit der ersten Speisedrossel L1 verbunden. An diesen Anschlusspunkt sind die Dioden D1 und D3 angeschaltet; die Kathode der Diode D1 ist mit Masse verbunden, während die Anode der Diode D3 mit dem Minuspol verbunden ist. Der zweite Anschluss der ersten Speisedrossel L1 ist mit dem Anschlusspunkt $a_1$ verbunden. In gleicher Weise ist der zweite elektronische Schalter SE2 über den ohmschen Widerstand R4 an Masse angeschaltet, während sein zweiter Anschluss mit der zweiten Speisedrossel L2 verbunden ist. An ihn sind die Dioden D2 und D4 in der gleichen Weise wie die Dioden D1 und D3 angeschlossen. Der zweite Anschluss der zweiten Speisedrossel L2 ist mit dem Anschlusspunkt $b_1$ verbunden. Zwischen den Anschlusspunkten $a_1$ und $b_1$ liegt der Kondensator C; weitere Kondensatoren C1 und C2 sind von den Anschlusspunkten $a_1$ und $b_1$ zur Siebung ebenfalls gegen Masse geschaltet. Über den ohmschen Widerstand R3 ist ein dritter elektronischer Schalter ebenfalls an den Minuspol der Versorgungsspannung angeschlossen. Sein Ausgang ist jedoch wie beim zweiten elektronischen Schalter SE2 an die zweite Speisedrossel L2 angeschaltet. In gleicher Weise ist ein vierter elektronischer Schalter SE4 über den ohmschen Widerstand R4 an die erste Speisedrossel L1 angeschaltet. Die elektronischen Schalter SE1 und SE2 werden gleichzeitig über einen fünften Transistor TR5 gesteuert, dessen Basis an den Ausgang $0_8$ einer Ansteuerlogik AL

angeschlossen ist. Die elektronischen Schalter SE3 und SE4 werden dann entsprechend über einen sechsten Transistor TR6 angesteuert, dessen Basis mit dem Ausgang $0_7$ der Ansteuerlogik AL verbunden ist.

An die polfernen Anschlusspunkte der Widerstände R3 und R4 sind die Eingänge $I_5$ und $I_4$ einer Additionsschaltung AD angeschaltet, deren Ausgang $0_4$ mit dem Eingang $I_6$ einer Überwachungsschaltung MO und dem nichtinvertierenden Eingang eines erstem Komparators C01 verbunden ist. Der Ausgang des ersten Komparators C01 ist mit dem Eingang $I_7$ der Ansteuerlogik AL verbunden. Der invertierende Eingang des ersten Komparators C01 ist über einen Kondensator C3 an Masse geschaltet und über einen Widerstand R7 mit dem Ausgang $0_3$ einer Gleichrichterschaltung GL, deren Eingang $I_3$ mit dem Ausgang $0_1$ eines Verstärkers AMP verbunden ist. Die Eingänge $I_1$ und $I_2$ sind jeweils mit einem der Anschlusspunkte $a_1$ bzw. $b_1$ verbunden. Über einen achten Widerstand R8 ist der invertierende Eingang des ersten Komparators C01 ebenfalls an einen Anschlusspunkt $I_T$ geführt, an dem eine Rechteckspannung anliegt. Der Ausgang eines zweiten Komparators C02 ist an einen weiteren Eingang $I_8$ der Ansteuerlogik angeschaltet. Der nichtinvertierende Eingang des zweiten Komparators C02 ist über einen Spannungsteiler R31, R32 mit dem Ausgang $0_1$ des Verstärkers AMP verbunden. Der zweite Anschluss des Widerstandes R32 ist über einen Inverter IN2 mit dem Ausgang $0_6$ der Überwachungsschaltung MO verbunden. Der invertierende Eingang des zweiten Komparators C02 ist über einen gegen Masse geschalteten ohmschen Spannungsteiler R9, R10 mit dem Ausgang eines NAND-Gatters G1 verbunden. Der erste Eingang dieses NAND-Gatters ist an den Ausgang $0_6$ der Überwachungsschaltung MO angeschlossen, der zweite Eingang des NAND-Gatters G1 ist an einen Polaritätssteuereingang $I_p$ angeschaltet, der ebenfalls über den Eingang $I_9$ in den Verstärker AMP eingreift und die Stromrichtung, d.h. die Polarität an den Anschlusspunkten $a_1$ und $b_1$, bestimmt.

Ein Ausführungsbeispiel des elektronischen Schalters SE3 ist detailliert dargestellt. Er enthält einen NPN-Transistor TR3, der über den PNP-Transistor TR5 und den Spannungsteiler R6, R5 angesteuert wird. Der Verbindungspunkt der Widerstände R6, R5 ist mit der Basis von TR3 verbunden, der andere Anschlusspunkt des Widerstandes R5 ist an den Emitter von TR3 und damit auch an den Widerstand R3 angeschlossen. Eine Diode D5 liegt zwischen dem Kollektor des Transistors TR3 und dem Ansteuereingang des dritten elektronischen Schalters SE3. Sie verhindert, dass der Transistor TR3 in die Sättigung gesteuert wird und ermöglicht dadurch ein schnelleres Schaltverhalten des Transistors. Der elektronische Schalter SE1 ist identisch aufgebaut. Die elektronischen Schalter SE2 und SE4 weisen bis auf die Verwendung von PNP-Transistoren und der Polung entsprechender Dioden einen identischen Aufbau auf.

Bevor auf nähere Schaltungseinzelheiten eingegangen wird, soll zunächst die Funktion der Stromeinspeisung kurz erläutert werden. Über die Ansteuerlogik AL wird jeweils ein Paar elektronischer Schalter SE1, SE2 oder SE3, SE4 periodisch durchgeschaltet. Die Schliesszeiten werden von einem Regelkreis bestimmt, der den Verstärker AMP, die Gleichrichterschaltung GL, die Additionsschaltung AD und den ersten Komparator C01 enthält. Für das periodische Durchschalten sorgt die Überlagerung einer dreieckförmigen Spannung, die durch den Widerstand R8 und den Kondensator C3 aus einer am Takteingang $I_T$ anliegenden Rechteckspannung gebildet wird. Die Überlagerung dieser Spannung ist für die Funktion der Schaltung nicht notwendig, sie ist jedoch erforderlich, um kein störendes Frequenzspektrum durch Regelvorgänge zu bekommen. Über den Polaritätssteuereingang $I_p$ wird bestimmt, welches Paar elektronischer Schalter verwendet wird und damit, welche Polarität an den Anschlusspunkten $a_1$, $b_1$ anliegt.

Die Überwachungsschaltung MO sorgt über das NAND-Gatter G1 für die Beibehaltung der Polarität bei geöffneter Schleife zwischen den Anschlusspunkten $a_1$, $b_1$. Dies erfolgt durch Anlegen unterschiedlicher Schwellen an den invertierenden Eingang des zweiten Komparators C02 und durch Umschalten des Spannungsteilers R31, R32.

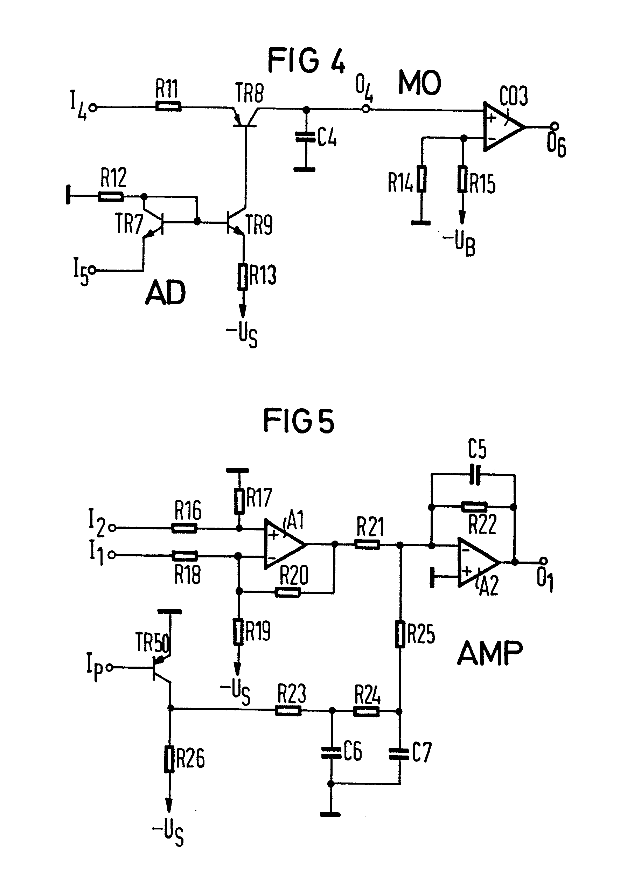

In Fig. 4 ist die Additionsschaltung AD dargestellt. Sie enthält einen PNP-Transistor TR8, dessen Emitter über einen ohmschen Widerstand R11 an den Eingang $I_4$ angeschaltet ist. Die Basis dieses Transistors ist mit dem Kollektor eines NPN-Transistors TR9 verbunden, dessen Emitter über einen Widerstand R13 an den Minuspol der Speisespannung $U_S$ angeschlossen ist. Die Basis dieses NPN-Transistors ist mit der Basis und dem Kollektor eines weiteren NPN-Transistors verbunden, dessen Kollektor über einen Widerstand R12 an Masse liegt. Der Emitter des Transistors TR7 ist an den Eingang $I_5$ angeschaltet. Die Transistoren TR7 und TR9 bilden somit eine bekannte Stromspiegelschaltung. An dem Kollektor des PNP-Transistors TR8 liegt die Summe der Eingangsspannungen dieser Additionsschaltung an, da R13 gleich R11 ist. Ein Siebkondensator C4 am Kollektor des Transistors TR8 sorgt für eine konstante Gleichspannung. Der Ausgang $0_4$ der Additionsschaltung ist mit der Überwachungsschaltung MO verbunden, die aus einem dritten Komparator C03 besteht. Die Schwelle wird durch einen Spannungsteiler R14, R15 am invertierenden Eingang des dritten Komparators C03 festgelegt. Andere Schaltungsanordnungen, bei denen die Überwachungsschaltung eine Hysterese aufweist, sind ebenfalls vorteilhaff.

Die Additionsschaltung misst die Spannungsabfälle an den Widerständen R3 und R4 und somit den Speisestrom. Wegen eventueller Unsymmetrien ist die Messung sowohl des ausgesendeten als auch des zurückfliessenden Stromes zweckmässig.

Der Verstärker AMP nach Fig. 5 enthält zwei Operationsverstärker A1, A2 und einen Transistor

TR50. Der Eingang $I_1$ des Verstärkers AMP ist über einen Widerstand R18 mit dem invertierenden Eingang des ersten Operationsverstärkers A1 verbunden. Ein Rückkopplungswiderstand R20 ist vom Ausgang auf den invertierenden Eingang geschaltet. Ein weiterer Widerstand R19 ist vom invertierenden Eingang an den Minuspol der Spannung $U_S$ geschaltet. Der zweite Eingang $I_2$ des Verstärkers AMP ist über einen Spannungsteiler R16, R17 an den nichtinvertierenden Eingang des ersten Operationsverstärkers A1 geschaltet. Über einen Widerstand R21 ist der Ausgang des ersten Operationsverstärkers mit dem invertierenden Eingang des zweiten Operationsverstärkers A2 verbunden. Im Rückkopplungsweg des zweiten Operationsverstärkers A2 liegt die Parallelschaltung eines Widerstandes R22 und eines Kondensators C5. Der nichtinvertierende Eingang dieses Operationsverstärkers ist geerdet. Der Polaritätssteuereingang Ip ist mit der Basis eines PNP-Transistors TR50 verbunden, dessen Kollektor über einen Widerstand R26 an den Minuspol der Speisespannung $U_S$ angeschaltet ist. Ausserdem ist der Kollektor des Transistors TR50 über die Reihenschaltung der Widerstände R23, R24 und R25 ebenfalls an den invertierenden Eingang des zweiten Operationsverstärkers A2 angeschaltet. Der Verbindungspunkt der Widerstände R23 und R24 und der Verbindungspunkt der Widerstände R24 und R25 liegen über jeweils einen Kondensator C6 und C7 an Masse.

Der Verstärker AMP soll an seinem Ausgang $0_1$ ein Signal liefern, das dem Spannungsabfall am Speisewiderstand entspricht, der durch die Reihenschaltung jeweils einer Speisedrossel und eines elektronischen Schalters nachgebildet ist. Das bedeutet, dass bei kleinem fliessenden Speiseströmen nur eine kleine Ausgangsspannung, bei grösseren Speiseströmen dagegen eine grössere Ausgangsspannung geliefert wird. Fliesst dagegen kein Speisestrom, so muss der Ausgang $0_1$ des Verstärkers AMP Null Volt abgeben. Die Messung wird zweckmässigerweise an den Anschlusspunkten $a_1$, $b_1$ vorgenommen.

Am ersten Eingang $I_1$ des Verstärkers AMP liegt bei offener Schleife der Minuspol der Speisespannung $U_S$ an, am zweiten Eingang $I_2$ des Verstärkers AMP liegt dagegen Masse (Null Volt) an. Durch die Dimensionierung der Spannungsteiler R16, R17 und R18, R19, R20 entsteht am Ausgang des ersten Operationsverstärkers A1 eine positive Spannung. Der Transistor TR50 ist jedoch durch das Anliegen von Masse an seinem Eingang gesperrt. Die Summe der über den Widerstand R21 und die an $-U_S$ liegende Reihenschaltung der Widerstände R23 bis R26 in den invertierenden Eingang des zweiten Operationsverstärkers A2 eingespeisten Ströme ist Null. Damit liegt der Ausgang des Verstärkers A2 auf Null. Durch das Anlegen eines negativen Potentials an den Polaritätssteuereingang $I_p$ kommt es zu einer Umpolung der Spannungen an den Eingängen $I_1$ und $I_2$ des Verstärkers AMP. Durch die Dimensionierung der ohmschen Spannungsteiler wird erreicht, dass dann am Ausgang des ersten Operationsverstärkers A1 Null Volt bei geöffneter Schleife anliegen. Da jetzt der Transistor TR50 durchgeschaltet ist, an seinem Kollektor also Null Volt anliegen, liegt dieses Potential ebenfalls am invertierenden Eingang des zweiten Operationsverstärkers A2 an. Fliesst Speisestrom, wird das Ausgangspotential des zweiten Operationsverstärkers A2 negativ. Bei umgedrehten Eingangspotentialen würde es dagegen bei einem fliessenden Speisestrom positiver.

Die Kondensatoren C6, C7 bilden mit den Widerständen R23, R24 einen Tiefpass und sorgen dafür, dass sich bei einem gewünschten Polaritätswechsel auf den Fernsprechadern die Ausgangsspannung des Verstärkers AMP langsam ändert.

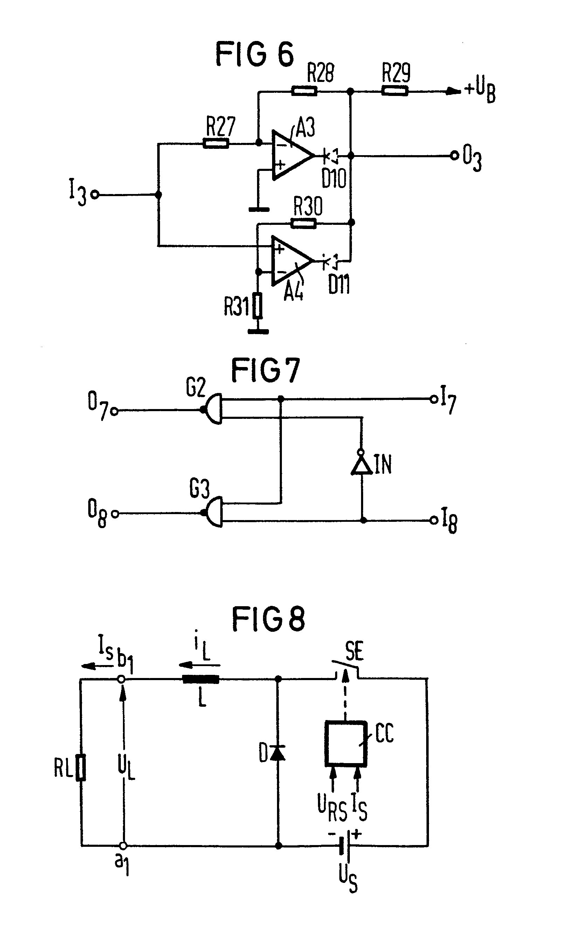

Für die Regelung wird eine von der Polarität unabhängige Regelgrösse benötigt. Deshalb ist an den Ausgang $0_1$ des Verstärkers AMP eine Gleichrichterschaltung GL (Fig. 6) angeschaltet, die in bekannter Weise bei einer von Null Volt verschiedenen Eingangsspannung stets dieselbe negative Ausgangsspannung liefert. Die Gleichrichterschaltung enthält einen dritten und vierten Operationsverstärker A3 und A4. Der Ausgang des dritten Operationsverstärkers A3 ist über eine Diode D10 mit dem Ausgang $0_3$ der Gleichrichterschaltung verbunden. Der Ausgang des vierten Operationsverstärkers A4 ist ebenfalls über eine weitere Diode D11 mit dem Ausgang $0_3$ verbunden. Über einen Widerstand R29 ist der Ausgang $0_3$ an das positive Betriebspotential $+U_B$ der Operationsverstärker geschaltet. Aus Gründen der Übersichtlichkeit wurden die Betriebsspannungsanschlüsse $+U_B$ der Operationsverstärker nicht eingezeichnet. Der dritte Operationsverstärker A3 ist über einen Widerstand R28 gegengekoppelt. Über einen weiteren Widerstand R27 ist der invertierende Eingang mit dem Eingang $I_3$ der Gleichrichterschaltung GL verbunden. Dieser Eingang ist ebenfalls direkt mit dem nichtinvertierenden Eingang des vierten Operationsverstärkers A4 verbunden. Auch dieser Operationsverstärker ist durch den Widerstand R30 gegengekoppelt. Ein weiterer Widerstand R31 ist vom invertierenden Eingang gegen Masse geschaltet. Auch der nichtinvertierende Eingang des dritten Operationsverstärkers A3 liegt an Masse. Da die Operationsverstärker das Eingangssignal sozusagen gegenpolig behandeln, wird jeweils das negativste Ausgangssignal die Spannung am Ausgang $0_3$ der Gleichrichterschaltung bestimmen. Je mehr die Spannung am Eingang $I_3$ von Null Volt abweicht, desto negativer wird das Ausgangspotential der Gleichrichterschaltung.

Die Dioden D10 und D11 können bei Open-Kollektor-Operationsverstärkern, z.B. TAA 27 61 der Firma Siemens, München, entfallen.

Die Ansteuerlogik in Fig. 7 enthält zwei NAND-Gatter G2, G3 und einen Inverter IN. Der Eingang $I_7$ der Gatterlogik führt auf jeweils den ersten Eingang jedes NAND-Gatters. Die Ausgänge der NAND-Gatter G2 und G3 sind mit $0_7$ und $0_8$ bezeichnet. Der Eingang $I_8$ der Ansteuerlogik ist direkt mit dem zweiten Eingang des NAND-Gatters G3 und über den Inverter IN mit dem zweiten Eingang des NAND-Gatters G2 verbunden.

Über die Ansteuerlogik wird jeweils ein Paar elektronischer Schalter SE1, SE2 oder SE3, SE4 angesteuert. Die Auswahl erfolgt über den Eingang $I_8$, der mit dem Ausgang des zweiten Komparators C02 verbunden ist. Über den Eingang $I_7$ der Ansteuerlogik wird die Zeitdauer des Durchschaltens vom ersten Komparator C01 bestimmt.

In Fig. 8 ist das Prinzip der erfindungsgemässen Schleifenstromeinspeisung vereinfacht dargestellt. Zwischen den Anschlusspunkten $a_1$ und $b_1$ liegt der Widerstand $R_L$. Dieser symbolisiert wieder einen Fernsprechteilnehmer oder eine Vermittlung einschliesslich des Widerstandes der Fernsprechleitung. Der Anschlusspunkt $b_1$ ist über eine Induktivität L und einen elektronischen Schalter SE an den Pluspol der Speisespannung $U_S$ angeschaltet. Der Minuspol der Speisespannung $U_S$ ist mit dem Anschlusspunkt $a_1$ und der Anode einer Diode D verbunden, deren Kathode mit dem Verbindungspunkt der Induktivität L mit dem elektronischen Schalter SE verbunden ist. Der elektronische Schalter SE wird von einer Regelung CC gesteuert, der als Regelgrössen der Spannungsabfall $U_{RS}$ am durch die Induktivität L und dem elektronischen Schalter SE nachgebildeten Speisewiderstand und der Schleifenstrom $I_S$ zugeführt werden. Durch Siebglieder, hier nicht dargestellt, wird aus dem durch die Induktivität L fliessenden Strom $i_L$ ein gleichmässigerer Schleifenstrom $I_S$.

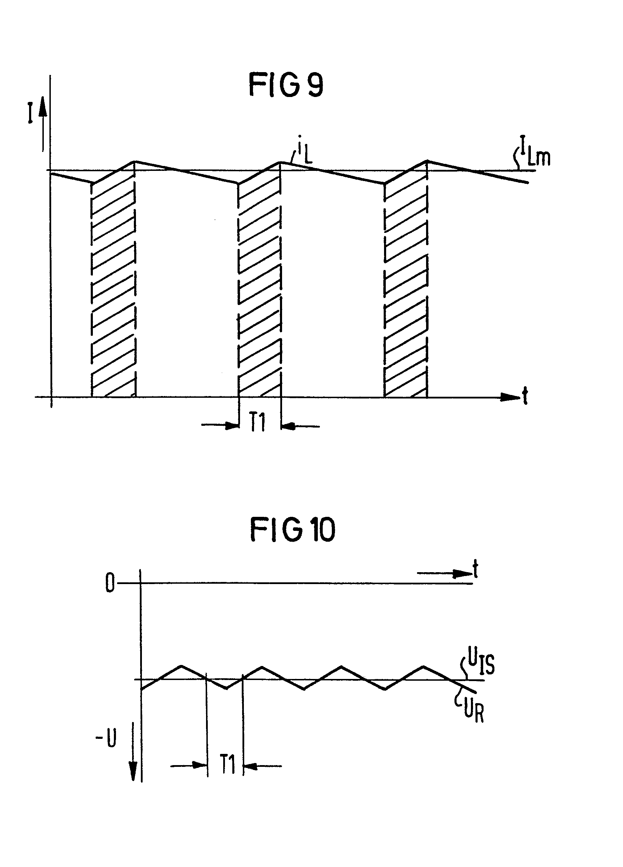

In Fig. 9 ist ein Zeitdiagramm des durch die Induktivität L fliessenden Stromes $i_L$ dargestellt. Während des schraffierten Zeitbereiches ist der elektronische Schalter SE geschlossen, wodurch der Strom durch die Induktivität L ansteigt. Während des Öffnens des elektronischen Schalters SE fliesst der Strom in der selben Richtung über die Diode D weiter, wobei er aufgrund des Widerstandes $R_L$ stetig absinkt, bis er durch erneutes Schliessen des elektronischen Schalters SE wiederum ansteigt. So stellt sich ein mittlerer Speisestrom $I_{Lm}$ ein, der dem geforderten Schleifenstrom $I_S$ entspricht.

Das in Fig. 3 dargestellte Ausführungsbeispiel der Erfindung arbeitet gemäss dem vorstehend beschriebenen Prinzip. Dem nichtinvertierenden Eingang des Komparators C01 wird eine dem Schleifenstrom proportionale Spannung $U_{IS}$ zugeführt. Diese wird mit zunehmendem Schleifenstrom negativer. Dem invertierenden Eingang des Komparators C01 wird eine dem Spannungsabfall an dem nachgebildeten Speisewiderstand proportionale Spannung $U_{RS}$ zugeführt, die ebenfalls mit zunehmendem Spannungsabfall negativer wird. Durch die überlagerte Dreieckspannung $U_D$ erfolgt das Öffnen und Schliessen der elektronischen Schalter mit einer vorgegebenen Frequenz. Ist die Summenspannung $U_R = R_{RS} + U_D$ negativer als die Spannung $U_{IS}$, so werden die elektronischen Schalter während des Zeitbereichs T1 durchgeschaltet. Durch die Regelschaltung wird dafür gesorgt, dass beide Spannungen am Eingang des Komparators C01 ungefähr gleich gross sind, also das Verhältnis des Spannungsabfalls an den nachgebildeten Speisewiderständen zum gemessenen Schleifenstrom konstant ist. Dadurch weist der durch jeweils eine Induktivität und einen elektronischen Schalter nachgebildete Speisewiderstand die Charakteristik eines normalen Widerstandes auf. Um eine Überlastung der Speisedrosseln zu verhindern, muss der Speisestrom auf einen zulässigen Maximalwert begrenzt werden. Die Begrenzung erfolgt hier durch die Aussteuergrenze des Verstärkers AMP, die die maximale Spannung $U_{RS}$ am Komparator C01 bestimmt. Zu erwähnen ist noch, dass durch die Verwendung eines Tiefpasses C5, R22 im Verstärker AMP der nachgebildete Speisewiderstand eine induktive Komponente erhält.

Eine Umkehrung der Polarität auf den Adern a, b der Fernsprechleitung, die einem Richtungswechsel des Speisestromes entspricht, darf nur langsam vor sich gehen, um geführte Gespräche nicht zu stören. Im Normalfall liegt an der a-Ader negatives Potential und der b-Ader positives Potential an. Der Transistor TR50 (Fig. 5) ist gesperrt, so dass das Potential am invertierenden Eingang des zweiten Operationsverstärkers A2 bei fliessendem Schleifenstrom negativ ist. Wird nun der Transistor TR50 leitend, so wird das Potential am invertierenden Eingang des zweiten Operationsverstärkers A2 zunächst zu Null Volt und dann positiv. Durch die Gegenkopplung des zweiten Operationsverstärkers A2 bleibt die Spannung am invertierenden Eingang bei ca. Null Volt.

Über den zweiten Operationsverstärker A2 und die Gleichrichterschaltung wird durch den ersten Komparator C01 bewirkt, dass zunächst die Schliesszeiten der elektronischen Schalter SE1, SE2 langsam auf Null herunter geregelt werden; dann wird durch den zweiten Komparator C02 das andere Paar elektronischer Schalter SE3, SE4 angesteuert, während die bisher aktiven elektronischen Schalter SE1, SE2 gesperrt bleiben. Anschliessend wird der Schleifenstrom wieder heraufgeregelt, bis er betragsmässig seinen ursprünglichen Wert erreicht. Hierdurch kann das Umschalten der Polarität auf den Fernsprechadern ohne Störung und ohne aufwendige Tiefpässe erfolgen.

**Patentansprüche**

1. Schleifenstromeinspeisung für einen Kennzeichenumsetzer mit
a) zwei Speisewiderständen, die jeweils an einen Pol ($\bot$, $-U_S$) einer Speisespannung ($U_S$) und über Siebmittel an jeweils eine Ader (a, b) einer Fernsprechleitung angeschlossen sind und jeweils durch eine Reihenschaltung einer Speisedrossel (L1, L2) und eines elektronischen Schalters (SE1, SE2) nachgebildet sind,
b) einer Regeleinrichtung (CC), die durch Schliessen und Öffnen der elektronischen Schalter (SE1, SE2) das Verhältnis des Spannungsabfalls an den nachgebildeten Speisewiderständen zum Schleifenstrom ($I_S$) konstant hält und
c) Schaltelementen (D1, D2), die jeweils an den schalterseitigen Anschlüssen der Speisedros-

seln (L1, L2) vorgesehen sind und über die der Schleifenstrom ($I_S$) bei geöffneten elektronischen Schaltern (SE1, SE2) fliesst.

2. Schleifenstromeinspeisung nach Anspruch 1, dadurch gekennzeichnet, dass als Schaltelemente Dioden (D1, D2) vorgesehen sind.

3. Schleifenstromeinspeisung nach Anspruch 1 oder Anspruch 2, dadurch gekennzeichnet, dass die Regeleinrichtung (CC) die elektronischen Schalter (SE1, SE2) mit einer konstanten Frequenz betätigt und die Schliesszeiten der elektronischen Schalter variiert.

4. Schleifenstromeinspeisung nach Anspruch 3, dadurch gekennzeichnet, dass die Regeleinrichtung einen ersten Komparator (C01) enthält, dessen erstem Eingang ($+$) eine dem Schleifenstrom proportionale Spannung ($U_{IS}$) zugeführt ist, dessen zweitem Eingang ($-$) eine dem Spannungsabfall an den nachgebildeten Speisewiderständen proportionale Spannung ($U_{RS}$) zugeführt ist, dass der an einem Eingang des ersten Komparators (C01) anliegenden Spannung eine dreieckförmige Spannung konstanter Frequenz überlagert ist und dass der Ausgang des ersten Komparators (C01) an die Steuereingänge der elektronischen Schalter (SE1, SE2) geführt ist.

5. Schleifenstromeinspeisung nach einem der vorhergehenden Ansprüche, dadurch gekennzeichnet, dass ein Verstärker (AMP) zur Messung des Spannungsabfalls an den nachgebildeten Speisewiderständen an die fernsprechleitungsseitigen Anschlüsse ($a_1$, $b_1$) der Speisedrosseln (L1, L2) angeschlossen ist und dass der Ausgang des Verstärkers über einen Tiefpass (A2, C5, R22) an den zweiten Eingang ($-$) des ersten Komparators (C01) geführt ist.

6. Schleifenstromeinspeisung nach einem der vorhergehenden Ansprüche, dadurch gekennzeichnet, dass zwei Paare elektronischer Schalter (SE1, SE2; SE3, SE4) vorgesehen sind, wovon jeweils ein Paar die Adern (a, b) der Fernsprechleitung umgekehrt an die beiden Potentiale ($-$, $+$) der Speisespannung ($U_S$) anschaltet.

7. Schleifenstromeinspeisung nach Anspruch 6, dadurch gekennzeichnet, dass ein den Tiefpass (A2, C5, R22) enthaltender Verstärker (AMP) vorgesehen ist, dessen Ausgang ($0_1$) über eine Gleichrichterschaltung (GL) an den zweiten Eingang ($-$) des ersten Komparators (C01) geführt ist, dass der Ausgang ($0_1$) des Verstärkers (AMP) auf den ersten Eingang ($+$) eines jeweils die Auswahl eines Paares elektronischer Schalter (SE1, SE2 oder SE3, SE4) bestimmenden zweiten Komparators (C02) geführt ist, dessen zweitem Eingang ($-$) eine Vergleichsspannung zugeführt ist, dass die Ausgänge der Komparatoren (C01, C02) mit Eingängen ($I_7$, $I_8$) einer Ansteuerlogik (AL) verbunden sind, über die jeweils ein Paar elektronischer Schalter (SE1, SE2; SE3, SE4) aktiviert wird.

8. Schleifenstromeinspeisung nach Anspruch 7, dadurch gekennzeichnet, dass ein weiterer Tiefpass (R23, C6, R24, C7) im Regelkreis vorgesehen ist, der über einen Polaritätssteuereingang ($I_p$) angesteuert wird und die Ausgangsspannung des Verstärkers (AMP) bei einem Polaritätswechsel langsam umpolt.

9. Schleifenstromeinspeisung nach einem der vorhergehenden Ansprüche, dadurch gekennzeichnet, dass eine Überwachungsschaltung (MO) für den Schleifenstrom vorgesehen ist, deren Ausgang mit dem Polaritätssteuereingang ($I_p$) logisch verknüpft ist und das Vergleichspotential am zweiten Eingang ($-$) des zweiten Komparators (C02) bestimmt.

10. Schleifenstromeinspeisung nach Anspruch 3, dadurch gekennzeichnet, dass die elektronischen Schalter (SE1, SE2; SE3, SE4) mit der n-fachen ($n = 1, 2, 3 . . .$) Frequenz von 8 kHz betrieben werden.

**Claims**

1. A loop current supply for a characterising signal converter comprising:

a) two supply resistors, each connected to a respective pole ($\perp$, $-U_S$) of a supply voltage ($U_S$) and to a respective wire (a, b) of a telephone line via filter means and each balanced by a series arrangement of a feeder reactance (L1, L2) and an electronic switch (SE1, SE2);

b) a regulating device (CC) which maintains the ratio of the voltage drop across the balanced supply resistors to the loop current ($I_S$) constant by closing and opening electronic switches (SE1, SE2); and

c) respective switching elements (D1, D2) are each arranged at switch-end terminals of the feeder reactances (L1, L2), via which the loop current ($I_S$) flows when the electronic switches (SE1, SE2) are open.

2. A loop current supply as claimed in Claim 1, characterised in that diodes (D1, D2) are provided as switching elements.

3. A loop current supply as claimed in Claim 1 or 2, characterised in that the regulating device (CC) actuates the electronic switches (SE1, SE2) at a constant frequency but varies the closing times of the electronic switches.

4. A loop current supply as claimed in Claim 3, characterised in that the regulating device comprises a first comparator (C01) whose first input ($+$) is supplied with a voltage ($U_{IS}$) proportional to the loop current, whose second input ($-$) is supplied with a voltage ($U_{RS}$) proportional to the voltage drop across the balanced supply resistors, that a triangular voltage of constant frequency is superimposed upon the voltage connected to one input of the first comparator (C01), and that the output of the first comparator (C01) leads to the control inputs of the electronic switches (SE1, SE2).

5. A loop current supply as claimed in one of the preceding Claims, characterised in that an amplifier (AMP) for measuring the voltage drop across the balanced supply resistors is connected to the telephone-line end terminals ($a_1$, $b_1$) of the feeder reactors (L1, L2), and that the output of the amplifier leads via a low-pass filter (A2, C5, R22) to the second input ($-$) of the first comparator (C01).

6. A loop current supply as claimed in one of the preceding Claims, characterised in that two pairs of electronic switches (SE1, SE2; SE3, SE4) are provided, of which in each case one pair connects the wires (a, b) of the telephone line in reverse fashion to the two potentials $(-, +)$ of the supply voltage $(U_S)$.

7. A loop current supply as claimed in Claim 6, characterised in that an amplifier (AMP) is provided which contains the low-pass filter (A2, C5, R22) and whose output $(0_1)$ leads via a rectifier circuit (GL) to the second input $(-)$ of the first comparator (C01), that the output $(0_1)$ of the amplifier (AMP) leads to the first input $(+)$ of a second comparator (C02) which specifies the selection of one pair of electronic switches (SE1, SE2 or SE3, SE4) and whose second input $(-)$ is supplied with a comparison voltage, that the outputs of the comparators (C01, C02) are connected to inputs $(I_7, I_8)$ of a drive logic unit (AL) via which, in each case, one pair of electronic switches (SE1, SE2; SE3, SE4) is activated.

8. A loop current supply as claimed in Claim 7, characterised in that the regulating circuit contains a further low-pass filter (R23, C6, R24, C7) driven via a polarity control input $(I_p)$ which slowly reverses the polarity of the output voltage of the amplifier (AMP) in the event of a polarity change.

9. A loop current supply as claimed in one of the preceding Claims, characterised in that a monitoring circuit (MO) is provided for the loop current, whose output is logic-linked to the polarity control input $(I_p)$ and determines the comparison potential at the second input $(-)$ of the second comparator (C02).

10. A loop current supply as claimed in Claim 3, characterised in that the electronic switches (SE1, SE2; SE3, SE4) are operated at n-times (n = 1, 2, 3 . . .) the frequency of 8 kHz.

## Revendications

1. Dispositif d'injection d'un courant de boucle pour un convertisseur de signaux caractéristiques, comportant
a) deux résistances d'alimentation, qui sont raccordées respectivement à un pôle $(\perp, -U_S)$ d'une tension d'alimentation $(U_S)$ et, par l'intermédiaire de moyens de lissage, à un conducteur respectif (a, b) d'une ligne téléphonique et qui sont équilibrés respectivement par un circuit série formé d'une bobine d'impédance d'alimentation (L1, L2) et d'un interrupteur électronique (SE1, SE2),
b) un dispositif de réglage (CC), qui, par fermeture et ouverture des interrupteurs électroniques (SE1, SE2), maintient constant le rapport de la chute de tension aux bornes de résistance d'alimentation simulées au courant de boucle $(I_S)$, et
c) des éléments de commutation (D1, D2), qui sont prévus respectivement sur les bornes, situées du côté des interrupteurs, des bobines d'impédance d'alimentation (L1, L2) et dans lesquelles le courant de boucle $(I_S)$ circule lors-

que les interrupteurs électroniques (SE1, SE2) sont ouverts.

2. Dispositif d'injection d'un courant de boucle suivant la revendication 1, caractérisé par le fait que des diodes (D1, D2) sont prévues en tant qu'éléments de commutation.

3. Dispositif d'injection d'un courant de boucle suivant la revendication 1 ou 2, caractérisé par le fait que le dispositif de réglage (CC) actionne les interrupteurs électroniques (SE1, SE2) à une fréquence constante et modifie les durées de fermeture des interrupteurs électroniques.

4. Dispositif d'injection d'un courant de boucle suivant la revendication 3, caractérisé par le fait que le dispositif de régulation contient un premier comparateur (C01), à une première entrée $(+)$ duquel est envoyée une tension $(U_S)$ proportionnelle au courant de boucle, et à la seconde entrée $(-)$ duquel est envoyée une tension $(U_{RS})$ proportionnelle à la chute de tension dans les résistances d'alimentation simulées, qu'une tension de forme triangulaire à fréquence constante est superposée à la tension appliquée à l'entrée du premier comparateur (C01) et que la sortie du premier comparateur (C01) est raccordée aux entrées de commande des interrupteurs électroniques (SE1, SE2).

5. Dispositif d'injection d'un courant de boucle suivant l'une des revendications précédentes, caractérisé par le fait qu'un amplificateur (AMP) servant à mesurer la chute de tension aux bornes des résistances d'alimentation simulées est raccordé aux bornes $(a_1, b_1)$, situées du côté de la ligne téléphonique, des bobines d'impédance d'alimentation (L1, L2) et que la sortie de l'amplificateur est reliée par l'intermédiaire d'un filtre passe-bas (A2, C5, R22) à la seconde entrée $(-)$ du premier comparateur (C01).

6. Dispositif d'injection d'un courant de boucle suivant l'une des revendications précédentes, caractérisé par le fait qu'il est prévu deux couples d'interrupteurs électroniques (SE1, SE2; SE3, SE4), dont respectivement un couple raccorde inversement les conducteurs (a, b) de la ligne téléphonique aux deux potentiels $(-, +)$ de la tension d'alimentation $(U_S)$.

7. Dispositif d'injection d'un courant de boucle suivant la revendication 6, caractérisé par le fait qu'il est prévu un amplificateur (AMP), qui contient le filtre passe-bas (A2, C5, R22) et dont la sortie $(0_1)$ est reliée par l'intermédiaire d'un circuit redresseur (GL) à la seconde entrée $(-)$ du premier comparateur (C01), que la sortie $(0_1)$ de l'amplificateur (AMP) est raccordée à la première entrée $(+)$ d'un second comparateur (C02), qui détermine respectivement le choix d'un couple d'interrupteurs électroniques (SE1, SE2 ou SE3, SE4) et à la seconde entrée $(-)$ duquel est envoyée une tension de comparaison, que les sorties des comparateurs (C01, C02) sont reliées aux entrées $(I_7, I_8)$ d'un circuit logique de commande (AL), au moyen duquel respectivement un couple d'interrupteurs électroniques (SE1, SE2; SE3, SE4) est activé.

8. Dispositif d'injection d'un courant de boucle selon la revendication 7, caractérisé en ce qu'il est prévu, dans le circuit de réglage, un autre filtre passe-bas (R23, C6, R24, C7) qui est commandé par l'intermédiaire d'une entrée de commande de polarité ($I_p$) et qui inverse lentement la polarité de la tension de sortie de l'amplificateur (AMP) dans le cas d'un changement de polarité.

9. Dispositif d'injection d'un courant de boucle suivant l'une des revendications précédentes, caractérisé par le fait qu'il est prévu un circuit (MO) de contrôle du courant de boucle, dont la sortie est combinée logiquement avec l'entrée de commande de polarité ($I_p$) et qui détermine le potentiel de comparaison sur la seconde entrée (−) du second comparateur (C02).

10. Dispositif d'injection d'un courant de boucle suivant la revendication 3, caractérisé par le fait que les interrupteurs électroniques (SE1, SE2; SE3, SE4) fonctionnent avec une fréquence égale à n fois (n = 1, 2, 3, . . .) la fréquence de 8 kHz.

# FIG 1

# FIG 2

FIG 3

13

FIG 4

MO

FIG 5

AMP

# FIG 6

# FIG 7

# FIG 8

# FIG 9

I

$i_L$

$I_{Lm}$

T1

t

# FIG 10

0

t

$U_{IS}$

$U_R$

-U

T1